Europäisches Patentamt

(19) European Patent Office

Office européen des brevets

(11) Numéro de publication : **0 003 326**
**B1**

(12) **FASCICULE DE BREVET EUROPÉEN**

(45) Date de publication du fascicule du brevet :
21.10.81

(21) Numéro de dépôt : 79100147.2

(22) Date de dépôt : 18.01.79

(51) Int. Cl.³ : **B 23 P 19/06**

(54) **Dispositif automatique de vissage et de manutention de goujons.**

(30) Priorité : 23.01.78 FR 7801802

(43) Date de publication de la demande :
08.08.79 (Bulletin 79/16)

(45) Mention de la délivrance du brevet :
21.10.81 Bulletin 81/42

(84) Etats contractants désignés :
**BE CH DE GB IT NL SE**

(56) Documents cités :
FR - A - 2 141 141
FR - A - 2 152 873

(73) Titulaire : **SKF COMPAGNIE D'APPLICATIONS MECA-
NIQUES Société anonyme dite:**
**1, Avenue Newton**
**F-92142 Clamart (FR)**

(72) Inventeur : **Boudet, Georges**
**130, Rue du Bocage St. Cyr sur Loire**
**F-37100 Tours (FR)**
Inventeur : **Desmoulins, Jean-Claude**
**70 Rue des Anglais**
**F-78700 Conflans Ste Honorine (FR)**

(74) Mandataire : **Casalonga, Alain et al**
**Bureau D.A. Casalonga Lilienstrasse 77**
**D-8000 München 80 (DE)**

Imprimerie Jouve, 17, rue du Louvre, 75001 Paris, France

Dispositif automatique de vissage et de manutention de goujons

La présente invention a pour objet un dispositif automatique permettant d'effectuer le vissage, le dévissage et la manutention de goujons de dimensions importantes en particulier de goujons de fixation du couvercle d'une cuve de réacteur nucléaire.

On sait que dans l'industrie nucléaire, la fixation des couvercles de cuve se fait à l'aide de goujons de grandes dimensions et d'un poids important. Ces goujons qui sont répartis sur toute la périphérie de la cuve doivent pouvoir être vissés et dévissés, de préférence par des moyens automatiques afin d'éviter un séjour prolongé du personnel dans les zones qui peuvent être soumises à des radiations dangereuses. Par ailleurs, il est également nécessaire d'assurer la manutention et le transport de ces goujons soit avant l'opération de vissage, soit après un dévissage permettant le retrait et le démontage du couvercle.

Le brevet français n° 7 232 245 publié sous le n° 2 152 873 décrit des mécanismes de levage pour des dispositifs de mise sous tension hydraulique de tels goujons. Les mécanismes de levage peuvent se déplacer sur un chemin de roulement circulaire placé au-dessus de la cuve.

La présente invention a pour objet un dispositif automatique qui permet de résoudre l'ensemble des problèmes de manutention et de transport des goujons et qui soit d'une construction compacte pouvant être déplacé par rapport à la cuve de façon à coopérer successivement avec les différents goujons.

Le dispositif automatique de vissage et de manutention de goujons selon la présente invention comprend tout d'abord un châssis principal formant portique pouvant se déplacer le long de la périphérie de la cuve et disposé entre le bord supérieur de la cuve et un rail de guidage circulaire placé au-dessus du bord supérieur de la cuve. Le châssis principal présente un ensemble de poutres horizontales de guidage. Le dispositif comprend en outre un châssis secondaire susceptible de se déplacer horizontalement par rapport au châssis principal par l'intermédiaire de palonniers coopérant avec les poutres horizontales de guidage solidaires du châssis principal. Un mécanisme de vissage comprenant une visseuse peut se déplacer verticalement par rapport au châssis secondaire précité. Un mécanisme de préhension du goujon est en outre monté sur le châssis secondaire et se trouve solidaire en déplacement de la visseuse.

Dans un mode de réalisation préféré, le châssis principal formant portique comprend deux poutres verticales et peut rouler sur la périphérie de la cuve au moyen de galets inférieurs. Des galets de support supérieurs solidaires du châssis principal prennent appui sur la face supérieure de l'aile inférieure du rail de guidage circulaire précité. L'ensemble du châssis principal est entraîné en déplacement par rapport à la cuve au moyen de galets moteurs entraînés en synchronisme et venant en contact d'une part avec la face inférieure de l'aile inférieure du rail de guidage et d'autre part avec la périphérie de la cuve.

Les galets de support supérieurs sont de préférence au nombre de deux et comportent un axe de rotation incliné afin de coopérer avec la face supérieure inclinée de l'aile précitée du rail de guidage circulaire.

Des galets de verrouillage de préférence également au nombre de deux viennent en contact avec le bord périphérique du rail de guidage, à l'opposé des galets de support supérieurs.

Il en résulte que l'ensemble du dispositif automatique de l'invention peut de cette manière se déplacer tout autour de la cuve du réacteur en suivant sa périphérie de façon à venir se placer successivement au-dessus de chacun des goujons à visser ou dévisser.

Dans un mode de réalisation préféré, les poutres horizontales de guidage solidaires du châssis principal portent des chaînes solidaires de bielles reliées au châssis secondaire, le déplacement desdites chaînes provoquant le déplacement horizontal du châssis secondaire. De cette manière, le goujon convenablement maintenu par le mécanisme de préhension, peut être déplacé avec le châssis secondaire depuis une position où il peut être monté dans le taraudage correspondant de la cuve jusqu'à une position où il peut être aisément extrait du dispositif de l'invention en vue d'une manutention ultérieure.

Le déplacement vertical du mécanisme de vissage et du mécanisme de préhension du goujon se fait avantageusement au moyen d'un ensemble d'entraînement fixe par rapport au châssis secondaire, provoquant la rotation de vis à roulement telles que des vis à billes, entraînant un déplacement vertical de l'ensemble par rapport au châssis secondaire.

Dans les cas où le goujon est équipé d'une rondelle de serrage le dispositif de l'invention comporte de préférence un mécanisme de préhension de ladite rondelle également solidaire en déplacement du mécanisme de préhension du goujon et de la visseuse.

La présente invention sera mieux comprise à l'étude d'un mode de réalisation particulier pris à titre d'exemple nullement limitatif et adapté au vissage, dévissage et manutention des goujons de fixation du couvercle d'une cuve de réacteur nucléaire. La description sera faite en référence aux dessins annexés sur lesquels :

la figure 1 représente schématiquement partiellement en coupe et en vue extérieure une vue de côté de l'ensemble du dispositif automatique de l'invention ;

la figure 2 est une vue en élévation du dispositif de la figure 1 ;

la figure 3 est une vue en coupe partielle agrandie selon III-III de la figure 1 montrant le dispositif d'entraînement en translation verticale de la visseuse ; et

la figure 4 est une vue partielle en coupe selon IV-IV de la figure 1 montrant le mécanisme assurant le déplacement transversal du châssis secondaire par rapport au châssis principal du dispositif de l'invention.

Dans l'exemple représenté sur les figures, le dispositif de l'invention se trouve monté à la périphérie d'une cuve 1 de réacteur nucléaire laquelle se trouve surmontée d'un couvercle 2 fixé à la cuve au moyen de goujons tels que le goujon 3. Le dispositif de l'invention comprend un châssis principal 4 et un châssis secondaire 5.

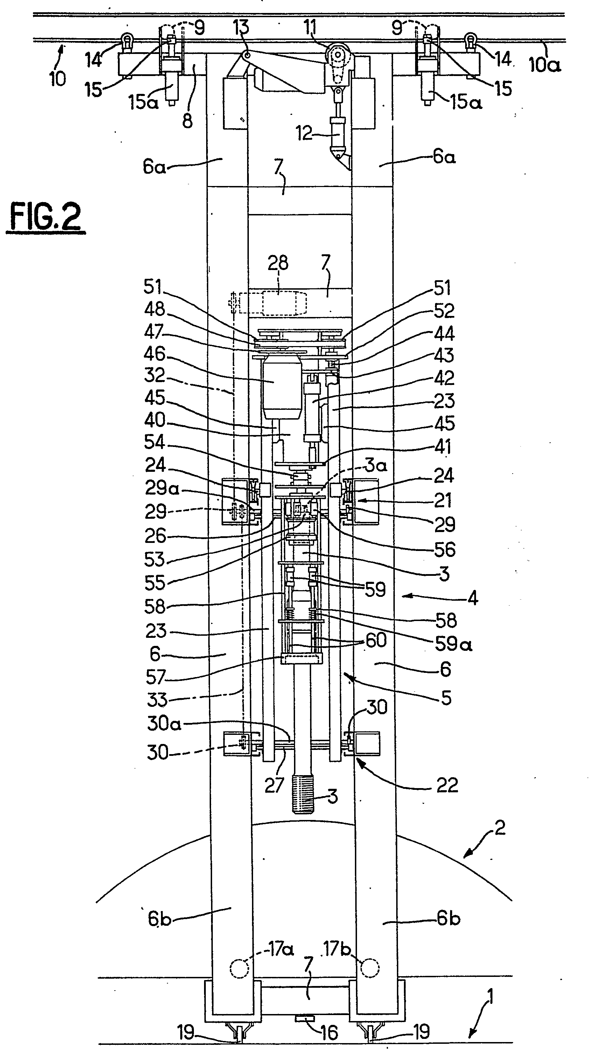

Le châssis principal 4 est constitué pour l'essentiel de deux poutres verticales 6 maintenues à un écartement convenable par des entretoises 7, le châssis secondaire 5 venant se loger entre les deux poutres 6. L'extrémité supérieure de chaque poutre verticale 6 présente une portion 6a dirigée vers l'intérieur par rapport à la cuve du réacteur. Une poutre 8 disposée horizontalement à la partie extrême des portions 6a des poutres verticales 6 reçoit deux galets de support supérieurs 9 dont les axes sont inclinés par rapport à l'horizontale de façon à venir rouler sur la face supérieure inclinée de l'aile inférieure 10a d'un rail de guidage 10 de forme circulaire qui est placé au-dessus de la cuve et présente un diamètre sensiblement égal à celui du cercle par lequel passent les axes des goujons de fixation du couvercle de la cuve 2. On notera sur la figure 2 que les deux galets de support 9 sont placés au voisinage des extrémités de la poutre horizontale 8 à l'extérieur des deux poutres verticales 6.

La poutre horizontale 8 sert également de support à un galet moteur supérieur 11 qui est maintenu contre la face inférieure de l'aile 10a du rail de guidage 10 au moyen d'un vérin 12, la chape de maintien du galet moteur 11 pouvant pivoter autour d'un axe 13.

Le maintien du châssis principal 4 par rapport au rail de guidage 10 se fait par l'intermédiaire de deux galets de verrouillage 15 montés de chaque côté du châssis principal 4 sur la poutre horizontale 8, lesdits galets coopérant avec le bord périphérique externe de l'aile inférieure 10a du rail de guidage 10 à l'opposé des deux galets de support 9. Chaque galet de verrouillage 15 peut être déplacé verticalement par un vérin à simple effet et à rappel élastique 15a de façon à libérer le châssis principal 4 du rail de guidage 10. L'ensemble du dispositif de l'invention peut être transporté au moyen des crochets de manutention 14 placés aux extrémités de la poutre 8.

Les extrémités inférieures 6b des poutres verticales 6 comportent un galet inférieur fou 16 à axe vertical roulant sur la périphérie de la cuve ainsi que deux galets 17a, 17b à axe horizontal roulant sur un rebord horizontal du couvercle 2 et pouvant être mis en position au moyen de vérins 18. Le galet 17a est fou et le galet 17b entraîné en rotation en synchronisme avec le galet moteur supérieur 11.

Lorsque l'ensemble du dispositif de l'invention, soutenu par les crochets de manutention 14 est amené en position par le haut, les poutres verticales 6 sont guidées par deux galets d'accostage 19 à axe horizontal maintenus en contact avec la périphérie de la cuve par l'action de vérins 20. Lorsque le dispositif de l'invention est en position convenable sur la cuve, les galets d'accostage 19 sont reculés en position inactive par l'action des vérins 20, les galets 16, 17a et 17b assurant alors le guidage et l'entraînement de la partie basse du châssis principal 4 en coopérant avec la périphérie de la cuve.

Deux poutres horizontales 21 à double rainure de guidage sont fixées respectivement sur les faces internes des deux poutres verticales 6 qui constituent le châssis principal 4 et en une position sensiblement médiane par rapport à la hauteur dudit châssis principal. Deux poutres horizontales de guidage 22 à rainure de guidage simple sont disposées parallèlement aux précédentes et en position inférieure, l'écartement entre les poutres 21 et 22 correspondant sensiblement à la longueur totale du goujon ou quelque peu inférieure à cette dernière. Les poutres horizontales de guidage 21 et 22 s'étendent vers l'intérieur par rapport à la cuve du réacteur jusqu'à dépasser légèrement la position de l'axe du taraudage devant recevoir le goujon. Elles s'étendent également en direction opposée au-delà des poutres verticales 6 de façon à permettre une extraction du goujon comme on le verra plus loin.

Le châssis secondaire 5 est constitué par deux poutres verticales 23 à profil en U dont les extrémités inférieures se trouvent sensiblement au niveau des poutres horizontales de guidage inférieures 22 et dont les extrémités supérieures se trouvent nettement au-dessus des poutres de guidage supérieures 21 de façon à permettre l'installation d'un mécanisme de vissage. Les poutres verticales 23 sont solidaires par leur face externe de deux palonniers de support 24 qui comportent des galets 25 roulant respectivement sur les ailes inférieure et supérieure de l'une des rainures de guidage des poutres horizontales de guidage 21.

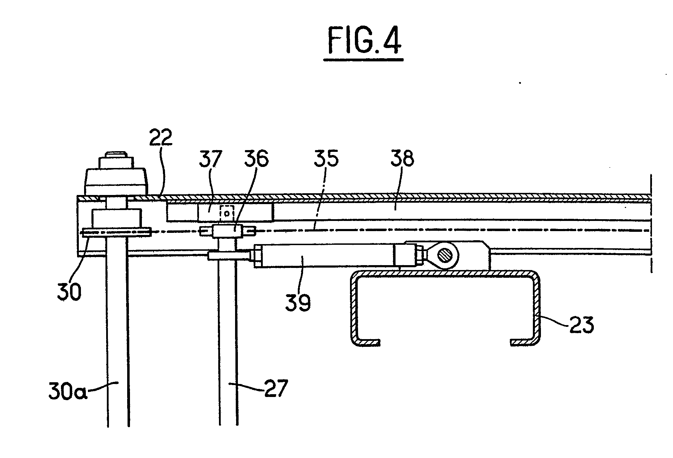

L'entraînement en translation horizontale du châssis secondaire 5 se fait par l'intermédiaire de bielles horizontales d'entraînement supérieure 26 et inférieure 27 qui sont solidaires des poutres verticales 23. Le mécanisme de déplacement en translation du châssis secondaire 5 comprend un moteur d'entraînement 28 monté sur le châssis principal 4 et imprimant une rotation aux roues à chaîne supérieures 29 et inférieures 30 qui sont montées sur des arbres 29a et 30a solidaires du châssis principal 4. Le mouvement du moteur 28 est transmis aux roues à chaîne 29 par une chaîne sensiblement verticale 32 et depuis les roues à chaîne supérieures 29 jusqu'aux roues à chaîne inférieures 30 par une chaîne verticale 33. La rotation des arbres 29a et 30a provoque la mise en mouvement de chaînes supérieures 34 et inférieures 35 disposées horizontalement à l'intérieur des poutres horizontales de guidage 21 et 22. Comme on peut le voir sur la figure 4 un élément intermédiaire 36 est intercalé entre deux maillons de la chaîne 35. L'élément intermédiaire 36 est solidaire d'une part d'un patin de guidage 37 qui coopère avec un profilé de guidage 38 solidaire de la poutre horizontale 22. L'élément intermédiaire 36 est d'autre part solidaire de la bielle 27 qui est reliée par l'intermédiaire d'un tirant 39 à la poutre verticale 23 du châssis secondaire 5. Les éléments représentés sur le figure 4 se retrouvent de manière identique de chaque côté du châssis secondaire 5 en regard des poutres horizontales de guidage 22 et 21.

Il en résulte que la rotation des roues à chaîne 29 et 30 provoque un déplacement horizontal du châssis secondaire 5 entraîné par le déplacement des bielles 26 et 27.

Le mécanisme de vissage comprend une visseuse 40 qui est supportée par le bas par un plateau horizontal 41 lui-même soutenu par deux vérins de support 42 permettant de compenser sensiblement le poids du goujon 3 lors du vissage et du dévissage. Les vérins 42 sont solidaires par leurs extrémités hautes d'un plateau horizontal 43 qui peut se déplacer verticalement lors de la rotation de deux vis à billes 44 logées à l'intérieur du profil en U des poutres verticales 23 du châssis secondaire 5. La visseuse 40 est de plus maintenue par des ensembles de guidage 45 munis de galets qui coopèrent avec le profil en U des poutres verticales 23.

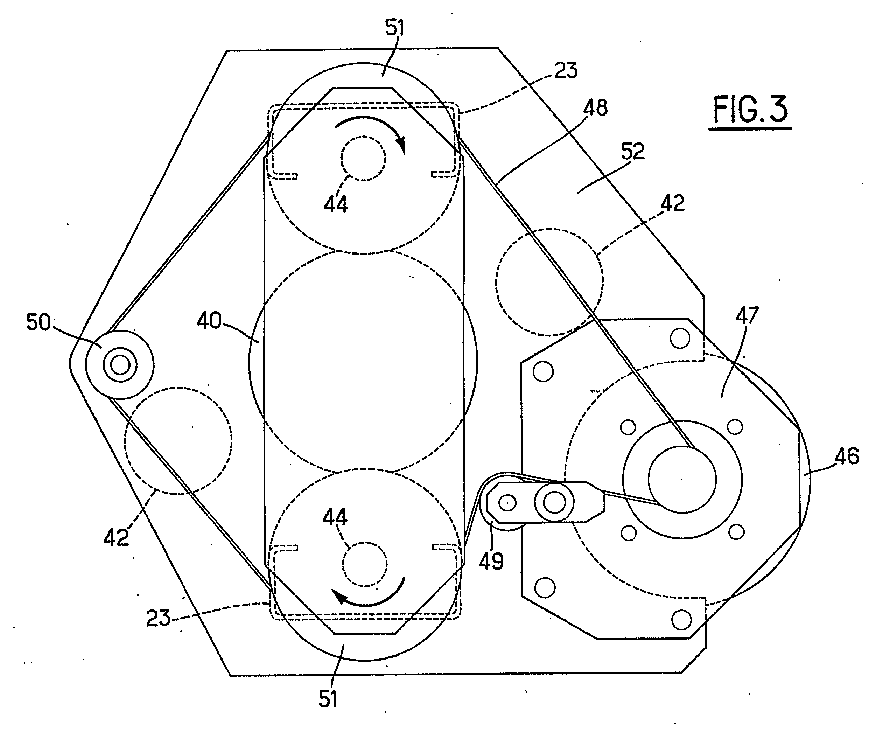

Le mécanisme permettant la translation verticale de la visseuse 40 accompagnée des plateaux 41 et 43 est représenté sur la figure 3. Le moteur d'entraînement 46 est monté de manière fixe par l'intermédiaire du plateau horizontal 47 sur le châssis secondaire 5. Une courroie 48 passant sur un galet tendeur 49 et un galet de guidage 50 entraîne en rotation dans le même sens deux poulies 51 qui sont solidaires en rotation des vis à billes 44. L'ensemble de ce mécanisme est monté sur un plateau horizontal 52 fixe par rapport au châssis secondaire 5.

La tête 53 de la visseuse reliée à la visseuse proprement dite 40 par l'intermédiaire de joints de cardan 54 coopère avec la tête 3a du goujon 3.

Le goujon 3 est par ailleurs maintenu par l'intermédiaire d'un épaulement dont il est muni, au moyen d'un dispositif de préhension 55 de type classique comportant des cliquets qui ne sont pas représentés sur la figure qui viennent coopérer avec ledit épaulement et qui peuvent être libérés par l'action de trois vérins hydrauliques 56 solidaires du châssis secondaire 5.

Le dispositif comporte également un mécanisme de préhension 57 pour une rondelle disposée autour du goujon 3. Ce mécanisme est soutenu par des tiges verticales 58 solidaires du châssis secondaire 5 et comporte des griffes de préhension agissant de manière classique par coincement sur la rondelle. L'actionnement de ces griffes est réalisé par des vérins de commande 59 et des bielles de transmission 60, des ressorts 59a assurant un blocage de sécurité de la rondelle.

Pour procéder au dévissage des goujons de fixation du couvercle d'une cuve de réacteur on procède alors de la manière suivante à l'aide du dispositif automatique de l'invention. Le dispositif de l'invention, suspendu par les crochets de préhension 14 est amené en position au-dessus de la périphérie de la cuve 1 puis est descendu lentement jusqu'à ce que les galets d'accostage 19 entrent en contact avec la périphérie de la cuve. Les galets d'accostage permettent alors de guider le dispositif jusqu'à sa position convenable, les galets de support supérieurs 9 venant en contact avec l'aile inférieure du rail de guidage 10. Les galets de verrouillage 15 sont alors commandés de manière à entrer en contact avec la périphérie du rail de guidage. On remarquera que dans cette position l'ensemble du dispositif de l'invention est parfaitement équilibré, son centre de gravité se trouvant sensiblement à l'aplomb du rail de guidage 10 grâce à la forme particulière des extrémités supérieures 6a des poutres verticales 6 orientées vers la cuve.

Le galet moteur 11 est mis en position d'action grâce aux vérins 12. Les galets d'accostage 19 sont placés en retrait par action sur les vérins 20 et les galets inférieurs fous 16 et 17a sont placés en contact avec la périphérie de la cuve. Le dispositif de l'invention peut alors être déplacé au moyen des galets moteurs 11 et 17b jusqu'à la position exacte de l'un des goujons qui peut être repérée par des moyens électrooptiques.

Le châssis secondaire 5 est déplacé dans la position la plus interne dans laquelle la visseuse se trouve dans l'axe du goujon 3. La tête de la visseuse est descendue en position basse par la rotation des deux vis à billes 44. Dans le même temps, le dispositif de préhension du goujon 55 est actionné de façon à soulever le goujon par l'intermédiaire des vérins 42 qui supportent le dispositif de préhension 55 par l'intermédiaire du plateau 41. De la même manière la rondelle qui est portée par le goujon est saisie par le dispositif de préhension 57 actionné par les vérins 59.

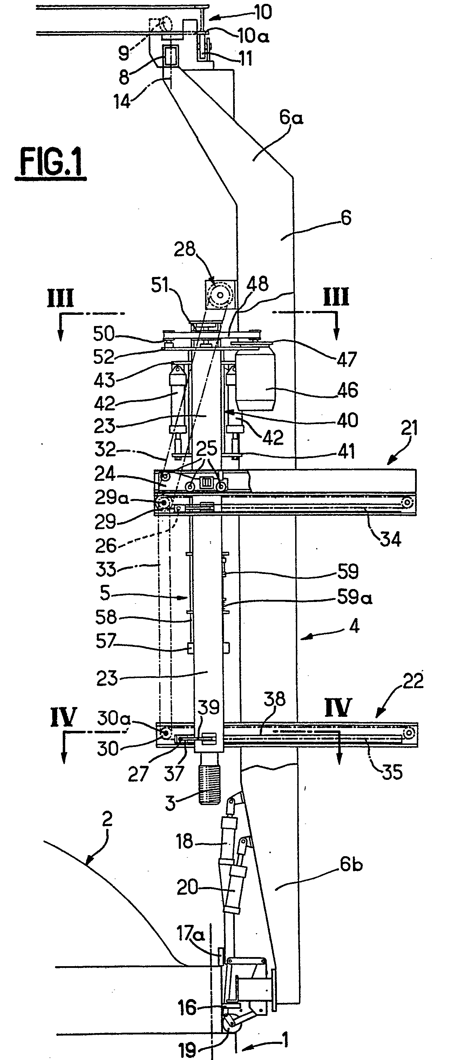

La visseuse 40 est ensuite entraînée en rotation provoquant le dévissage du goujon. On notera que l'ensemble constitué par la visseuse, le dispositif 55 de préhension du goujon maintenant le goujon et le dispositif 57 de préhension de la rondelle maintenant la rondelle est soutenu par les vérins 42 facilitant le dévissage. Le goujon est donc ainsi dévissé et extrait du taraudage de la cuve. Après cette opération où le goujon se trouve remonté en position haute tel que représenté sur les figures 1 et 2, le châssis secondaire 5 peut être commandé de façon à se déplacer transversalement par rapport aux poutres horizontales de guidage 21 et 22 jusqu'à occuper la position la plus extérieure dans laquelle le goujon 3, suspendu par le dispositif de préhension 55 se trouve complétement dégagé de la cuve du réacteur et peut alors être repris déposé dans un panier approprié placé dans la fosse autour de la cuve et non représenté sur les figures.

Il va de soi que l'opération de vissage se déroule de la même manière mais en sens inverse.

Le dispositif de l'invention permet donc de réaliser de façon automatique le vissage, le dévissage et la manutention de goujons de grande taille et de masse importante tels que ceux qui sont utilisés dans la fixation des couvercles de cuve de réacteurs nucléaires. L'opérateur peut surveiller ces différentes opérations par exemple au moyen d'une caméra de contrôle tout en restant en dehors des zones soumises à des radiations dangereuses.

**Revendications**

1. Dispositif automatique de vissage et de manutention de goujons en particulier pour goujons de fixation du couvercle d'une cuve de réacteur nucléaire comprenant des moyens de manutention de goujons pouvant se déplacer le long de la périphérie de la cuve et disposés entre le bord supérieur de la cuve et un rail de guidage circulaire (10) placé au-dessus dudit bord supérieur, caractérisé par le fait que lesdits moyens de manutention de goujons comprennent en combinaison : un châssis principal (4) comprenant un ensemble de poutres horizontales de guidage (21, 22) ; un châssis secondaire (5) pouvant se déplacer horizontalement par l'intermédiaire de palonniers (24) coopérant avec les poutres horizontales de guidage précitées ; un mécanisme de vissage comprenant une visseuse (40) pouvant se déplacer verticalement par rapport au châssis secondaire précité ; et un mécanisme (55) de préhension du goujon, monté sur le châssis secondaire et solidaire en déplacement de la visseuse.

2. Dispositif selon la revendication précédente, caractérisé par le fait que le châssis principal (4) comprend deux poutres verticales (6) et peut rouler sur la périphérie de la cuve au moyen de galets inférieurs (16, 17a), des galets de support supérieurs (9) solidaires du châssis principal prenant appui sur la face supérieure de l'aile inférieure du rail de guidage circulaire (10), l'ensemble étant entraîné au moyen d'un galet moteur supérieur (11) venant en contact avec la face inférieure de ladite aile inférieure et d'un galet moteur (17b) en contact avec la périphérie de la cuve et synchronisé avec le galet moteur supérieur (11).

3. Dispositif selon la revendication 2, caractérisé par le fait que les galets de support supérieurs (9) sont au nombre de deux et présentent un axe incliné de façon à coopérer avec la face supérieure inclinée de l'aile du rail de guidage circulaire (10).

4. Dispositif selon la revendication 3, caractérisé par le fait qu'il comporte deux galets de verrouillage (15) coopérant avec le bord périphérique du rail de guidage, à l'opposé des galets de support supérieurs (9).

5. Dispositif selon l'une quelconque des revendications précédentes, caractérisé par le fait que les poutres horizontales de guidage précitées (21, 22) portent des chaînes (34, 35) solidaires de bielles (26, 27) reliées au châssis secondaire, le déplacement desdites chaînes provoquant le déplacement horizontal des bielles précitées.

6. Dispositif selon l'une quelconque des revendications précédentes, caractérisé par le fait qu'il comprend un ensemble d'entraînement fixe par rapport au châssis secondaire, provoquant la rotation de vis à roulement (44) entraînant un déplacement vertical de la visseuse par rapport au châssis secondaire.

7. Dispositif selon l'une quelconque des revendications précédentes, caractérisé par le fait que la visseuse (40) et le mécanisme de préhension du goujon (55) sont maintenus par des vérins de support (42) permettant de compenser sensiblement le poids du goujon.

8. Dispositif selon l'une quelconque des revendications précédentes, caractérisé par le fait qu'il comporte en outre un mécanisme de préhension (57) pour une rondelle disposée autour du goujon, ledit mécanisme de préhension de rondelle étant solidaire en déplacement du mécanisme de préhension du goujon et de la visseuse.

9. Dispositif selon l'une quelconque des revendications précédentes, caractérisé par le fait que le châssis principal (4) comprend deux poutres verticales (6) présentant chacune une portion d'extrémité supérieure (6a) dirigée vers l'intérieur par rapport à la cuve de façon que le centre de gravité de l'ensemble du dispositif soit sensiblement à l'aplomb du rail de guidage lors des opérations de vissage et de dévissage.

**Claims**

1. An automatic device for screwing and handling pins and specially pins for fastening the cover of a nuclear reactor vessel comprising pin handling means displaceable along the periphery of the vessel and disposed between the upper edge of the vessel and a circular guide rail (10) placed above the said upper edge, characterized by the fact that the said pin handling means comprise in combination : a main frame (4) comprising an assembly of horizontal guide beams (21, 22) ; an auxiliary frame (5) displaceable horizontally by means of lifting beams (24) co-operating with the above-mentioned horizontal guide beams ; a screwing mechanism comprising a screwing device (40) displaceable vertically relatively to the above-mentioned auxiliary frame ; and a pin gripping mechanism (55) mounted on the auxiliary frame and displaceable jointly with the screwing device.

2. The device according to the preceding Claim, characterized by the fact that the main frame (4) comprises two vertical beams (6) and can roll over the periphery of the vessel by means of lower rollers (16, 17a), upper support rollers (9) fixed on the main frame resting on the upper face of the lower flange of the circular guide rail (10), the assembly being driven by means of an upper driving roller (11) coming into contact with the lower face of the said lower flange and by means of a driving roller (17b) in contact with the periphery of the vessel and synchronized with the upper driving roller (11).

3. The device according to Claim 2, characterized by the fact that the upper support rollers (9) are two in number and have an axis inclined in order to-co-operate with the inclined upper face of the flange of the circular guide rail (10).

4. The device according to Claim 3, characterized by the fact that it comprises two locking rollers (15) cooperating with the peripheral edge of the guide rail, opposite the upper support rollers (9).

5. The device according to any of the preceding Claims, characterized by the fact that the above-mentioned horizontal guide beams (21, 22) carry chains (34, 35) rigidly locked with rods (26, 27) connected to the auxiliary frame, the displacement of the said chains causing the above-mentioned rods to be displaced horizontally.

6. The device according to any of the preceding Claims, characterized by the fact that it comprises a driving assembly fixed relatively to the auxiliary frame, causing the rotation of rolling bearing screws (44) bringing about the vertical displacement of the screwing device relatively to the auxiliary frame.

7. The device according to any of the preceding Claims, characterized by the fact that the screwing device (40) and the pin gripping mechanism (55) are maintained by support jacks (42) which make it possible to counterbalance the pin weight substantially.

8. The device according to any of the preceding Claims, characterized by the fact that it further comprises a gripping mechanism (57) for a washer disposed around the pin, the said washer gripping mechanism being displaceable jointly with the pin gripping mechanism and the screwing device.

9. The device according to any of the preceding Claims, characterized by the fact that the main frame (4) comprises two vertical beams (6) each having an upper end portion (6a) canted inwards relatively to the vessel in order that the centre of gravity of the whole device is substantially plumb with the guide rail during the screwing and unscrewing operations.

**Ansprüche**

1. Automatische Vorrichtung zum Schrauben und Handhaben von Schraubenbolzen, insbesondere von Befestigungsbolzen für den Deckel eines Kernreaktordruckgefäßes, die Mittel zum Handhaben der Bolzen umfaßt, die dem Umfang des Druckgefäßes entlang verfahrbar zwischen dem oberen Rand des Druckgefäßes und einer herumführenden Führungsschiene (10), die über diesem oberen Rand angebracht ist, angeordnet sind, dadurch gekennzeichnet, daß diese Mittel zur Handhabung der Bolzen in Kombination enthalten : einen Hauptrahmen (4), der eine Konstruktion aus waagrechten Führungsträgern (21, 22) umfaßt, wobei ein Nebenrahmen (5), der sich mit Hilfe von mit den obigen waagrechten Führungsträgern zusammenwirkenden Stützhebel (24) senkrecht verschieben kann ; einen Schraubmechanismus bestehend aus einem Maschinenschrauber (40), der sich gegenüber dem obigen Nebenrahmen senkrecht verschieben kann ; sowie einen Greifmechanismus (55) für die Bolzen, der auf den Nebenrahmen montiert ist und sich zusammen mit dem Maschinenschrauber verschiebt.

2. Vorrichtung gemäß dem obigen Anspruch, dadurch gekennzeichnet, daß der Hauptrahmen (4) zwei senkrechte Träger (6) enthält und mittels unterer Rollen (16, 17a) auf dem Umfang des Druckgefäßes rollen kann, wobei obere mit dem Hauptrahmen fest verbundene Stützrollen (9) sich auf der Oberseite des unteren Flansches der herumführenden Führungsschiene (10) abstützen, wobei die gesamte Baugruppe mittels einer oberen Antriebsrolle (11), die an der Unterseite des unteren Flansches anliegt, sowie mittels einer Antriebsrolle (17b), die am Umfang des Druckgefäßes anliegt und mit der oberen Antriebsrolle (11) synchron läuft, in Bewegung gesetzt wird.

3. Vorrichtung gemäß Anspruch 2, dadurch gekennzeichnet, daß die oberen Stützrollen (9) zwei sind und eine geneigte Achse aufweisen so daß sie mit der geneigten oberen Seite des Flansches der herumführenden Führungsschiene (10) zusammenwirken.

4. Vorrichtung gemäß Anspruch 3, dadurch gekennzeichnet, daß sie zwei Verriegelungsrollen (15) umfaßt, die mit der Umfangskante der Führungsschiene gegenüber den oberen Stützrollen (9) zusammenwirken.

5. Vorrichtung gemäß einem beliebigen der obigen Ansprüche, dadurch gekennzeichnet, daß die obigen waagrechten Führungsträger (21, 22) an Schubstangen (26, 27) befestigte Ketten (34, 35) tragen, die mit dem Nebenrahmen verbunden sind, wobei die Verschiebung der Ketten die waagrechte Verschiebung dieser Schubstangen bewirkt.

6. Vorrichtung gemäß einem beliebigen der obigen Ansprüche, dadurch gekennzeichnet, daß sie eine gegenüber dem Nebenrahmen feste Antriebsvorrichtung enthält, die die Drehung von Wälzschrauben (44) hervorruft, wodurch die senkrechte Bewegung des Maschinenschraubers gegenüber dem Nebenrahmen bewirkt wird.

7. Vorrichtung gemäß einem beliebigen der obigen Ansprüche, dadurch gekennzeichnet, daß der Maschinenschrauber (40) sowie der Bolzengreifmechanismus (55) durch Hubvorrichtungen (42) gehalten werden, die es ermöglichen, das Gewicht des Schraubenbolzens im wesentlichen auszugleichen.

8. Vorrichtung gemäß einem beliebigen der obigen Ansprüche, dadurch gekennzeichnet, daß sie ferner einen Greifmechanismus (57) für eine um den Bolzen zu legende Unterlegscheibe enthält, wobei sich dieser Greifmechanismus für die Unterlegscheibe zusammen mit dem Greifmechanismus für den Bolzen und dem Maschinenschrauber bewegt.

9. Vorrichtung gemäß einem beliebigen der obigen Ansprüche, dadurch gekennzeichnet, daß der Hauptrahmen (4) zwei senkrechte Träger (6) enthält, die jeder am oberen Ende (6a) teilweise gegen das Druckgefäß nach innen gerichtet sind, so daß der Schwerpunkt der gesamten Baugruppe während der Arbeitsgänge des Zuschraubens und Aufschraubens im wesentlichen lotrecht unter der Führungsschiene liegt.

**FIG.1**

1/4

**FIG.2**

FIG.3

## FIG.4